# EUROPEAN PATENT SPECIFICATION

(11) **EP 0 816 699 B1**
(45) Date of publication and mention of the grant of the patent: **25.02.2004**
(21) Application number: 97110749.5
(22) Date of filing: 01.07.1997
(51) Int. Cl.: F16C 33/78

(54) **Sealing device for roller bearing**
Dichtungsvorrichtung für Wälzlager
Dispositif d'étanchéité pour roulements à rouleaux

(30) Priority: 05.07.1996 JP 19529896
(43) Date of publication of application: 07.01.1998
(73) Proprietor: KOYO SEIKO CO., LTD., Osaka 542-0081 (JP); Toyo Seal Industries Co., Ltd., Ikarugacho, Ikoma-gun, Nara-ken (JP)
(72) Inventor: Okumura, Tsuyoshi, Chuo-ku, Osaka 542 (JP); Nakagawa, Yoshitaka, Chuo-ku, Osaka 542 (JP); Wakabayashi, Mitsuru, c/o Toyo Seal Ind. Co., Ltd., Ikoma-gun, Nara-ken (JP)
(74) Representative: Riederer Freiherr von Paar zu Schönau, Anton

(56) References cited:
- DE-A- 2 731 764
- DE-U- 7 833 808
- US-A- 4 191 432
- US-A- 4 505 484

## Description

### FIELD OF THE INVENTION

The present invention relates to a sealed rolling element bearing capable of securing sealability for long periods.

### DESCRIPTION OF PRIOR ART

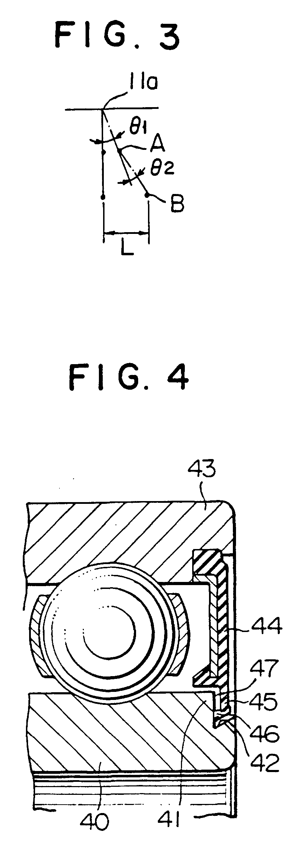

A conventional rolling element bearing comprising a sealing device has been known, for example, from U. S. Patent No. 4,191,432 filed by the present Applicant and issued on March 4, 1980. The construction of this sealing device for a rotting element bearing will be described with reference to FIG. 4. A shoulder 41 of an inner ring 40 of a rolling element bearing is provided with a peripheral shoulder portion 42. An annulus 44 secured to an outer ring 43 is provided with a soft inner peripheral seal lip 45 extending along a ring face 47 of the peripheral shoulder portion 42. This inner peripheral seal lip 45 is formed at its extreme end with an inner lip 46. The bearing is sealed by the contact of the inner lip 46 with the side 47 of the peripheral shoulder portion 42.

The sealing device as described above involves a problem concerning an interference with respect to the face 47 of the peripheral shoulder and the inner lip 46 of the inner seal lip 45. For example, in the case where the interference becomes excessively large in terms of unevenness of dimension of the inner lip 46 or the displacement of the inner ring, wear of the inner lip 46 occurs early, resulting in a surface contact at the inner surface of the inner peripheral seal lip 45 and not of only the inner lip 46, to lower the lip sliding surface pressure so that foreign matter such as water is likely to enter into the bearing from outside of the bearing. Accordingly, it is necessary to fully and strictly manage the interference of the inner lip 46.

A further sealed rolling element bearing, corresponding to the preamble of claim 1, is known from U.S. Patent No. 4 505 484. It comprises a sealing annulus which contacts the inner ring of the bearing with an inner ring lip which at its inner rim divides into two peripheral sealing lips which penetrate into a seal groove of the inner ring. From the root of said inner ring lip, also two further lips extend, one of which extends parallelly to the rotation axis towards the space between the outer and the inner ring without contacting them, and the other of which contacts or does not contact - depending on the respective embodiment - in an axial end region an outer peripheral bead. This prior art structure is designed to be sufficiently flexible for dealing with axial movements of the inner ring.

### SUMMARY OF THE INVENTION

It is an object of the present invention to provide a sealed rolling element bearing having a sealing element which is rather flexible and which is capable of securing sealability for long periods even if the wear of a lip due to an excessively large interference should occur.

The sealed rolling element bearing according to the invention comprises an inner ring, an outer ring, rolling elements between these rings and a seal annulus secured to the outer ring and covering the gap between the rings, the inner ring having a shoulder on which a peripheral shoulder portion is provided which presents a ring-shaped face, wherein along the radially inner peripheral portion of the seal annulus an inner peripheral seal lip extends in a diametrical direction along the ring-shaped face of the shoulder portion and said peripheral seal lip itself is provided with a plurality of seal lips: a first inner lip protruding from a first base at the radially extreme inner end of the inner peripheral seal lip and extending in a direction to and placed in contact with the ring-shaped face, and a first outer lip protruding from the base at the radially inner end of the peripheral seal lip in a direction opposite to the ring-shaped face, the peripheral seal lip comprising a tapered, oblique connecting ring portion between the inner peripheral portion of the seal annulus and the base of the first inner and outer lips, and is characterized in that said peripheral seal lip is provided with at least the following additional seal lips protruding from it from a respective additional base in the inner peripheral seal lip, the additional base being located between the first base and the inner peripheral portion of the seal annulus: at least one second inner lip extending in the direction to the ring-shaped face but coming in contact with the peripheral shoulder portion not before the first inner lip at the extreme end has been worn to a predetermined extent, and at least one second outer lip; the connecting portions between the inner peripheral portion of the seal annulus and the additional base, and between the additional base and the first base are each tapered so as to have a wider diameter in their regions closer to the ring-shaped face, and have each a minor wall-thickness with respect to the wall-thicknesses in the regions of the first and the additional bases located between the inner and the outer lips.

By the provision of the constitution as described above, the present invention causes the inner peripheral seal lip to allow an increase of the amount of axial flexure at the extreme end of the inner peripheral seal lip by a plurality of base points. Thus, the wear of the inner lip at the extreme end due to an excessively large interference caused by an axial displacement of the inner ring is hard to occur. However, even if the wear should occur, the other inner lips come in contact with the face of the peripheral shoulder portion after a predetermined degree of wear to maintain sealability.

### BRIEF DESCRIPTION OF THE DRAWINGS

FIG. 1 is a longitudinal sectional view of main parts showing one embodiment of a sealed rolling element bearing according to the present invention.
FIG. 2 is an enlarged view of main parts shown in FIG. 1.
FIG. 3 is a schematic view of the flexure of an inner peripheral seal lip shown in FIG. 1.
FIG. 4 is a longitudinal sectional view of a rolling element bearing with a conventional sealing device.

### DESCRIPTION OF THE PREFERRED EMBODIMENTS

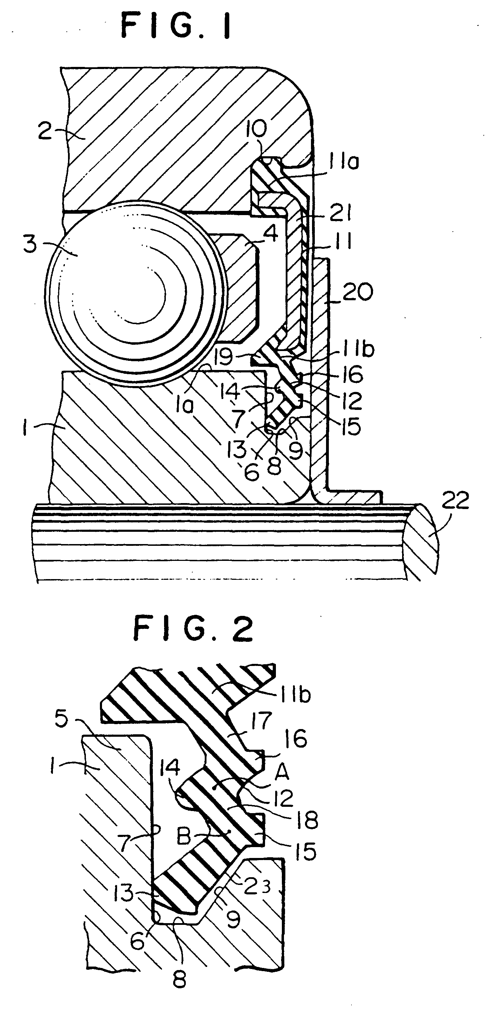

The embodiment of the present invention will be described hereinafter with reference to FIGS. 1 and 2. A ball 3 is disposed in a rolling manner between an inner ring 1 mounted on a shaft 22 and having one outer peripheral surface 1 a, and an outer ring 2 by means of a retainer 4. The inner ring 1 is formed in its shoulder 5 with a peripheral shoulder portion 6 comprising an inner side face 7 extending in a diametrical direction so as to be perpendicular to an axis, a bottom surface 8 parallel with the axis, and a taper surface 9 whose diameter increases toward the end of the inner ring 1, the peripheral shoulder portion 6 thus having substantially a J-shape in section. The outer ring 2 is formed at an inner peripheral end with a peripheral groove 10, and an outer peripheral portion 11a of a seal annulus 11 is secured to the peripheral groove 10. This seal annulus 11 is constituted from an elastic element such as rubber, in which a diametrically extending metallic core 21 is embedded. The seal annulus 11 is provided at its inner peripheral portion 11b with an axial lip 19 extending inwardly of the bearing to form a labyrinth sealing portion with the outer peripheral surface 1a of the inner ring 1. A soft inner peripheral seal lip 12 formed of an elastic element extends from the axial lip 19 in a diametrical direction along the side 7 of the peripheral shoulder 5.

The inner peripheral seal lip 12 of the seal annulus 11 is formed at its extreme end and at an intermediate portion, respectively, with two inner lips, i.e. a first inner lip 13 and a second inner lip 14, extending in a direction to the face 7 of the peripheral shoulder portion 6. Two outer lips, i.e. a first outer lip 15 and a second outer lip 16, are formed extending in the direction opposite of the face 7 of the peripheral shoulder 5 from positions, i.e. bases B and A, proximal to the positions of the first inner lip 13 and the second inner lip 14, respectively, resulting in the fact that the bases are thick-wall portions. Connecting portions 17 and 18 between the inner peripheral portion 11 b and base A and between base A and base B are made to be thin in wall-thickness and formed to extend axially obliquely outwardly. Of the inner lips, only the first inner lip 13 at the extreme end always is sealingly in contact with the face 7 of the peripheral shoulder portion 6. The other second inner lip 14 at first is not in contact with the face 7 of the peripheral shoulder portion 6 and comes in contact with the face 7 only after the first inner lip 13 has been worn by a predetermined amount.

That is to say, when the wear of the first inner lip 13 progresses and the lip sliding surface pressure lowers, the second inner lip 14 comes in contact with the face 7 so that the sealability is maintained. This second inner lip 14 prevents a rapid variation of torque when it begins to contact the face 7 as a circular shape in section. The second inner lip 14 forms a labyrinth sealing portion relative to the face 7 till it comes in contact with it.

Since the lips are connected by the thin connecting portions 17, 18 which are inclined axially obliquely outwardly, the connecting portions 17, 18 can be sequentially easily flexed outwardly of the bearing with the thick-wall base A between the inner peripheral portion 11 b of the seal annulus 11, the second inner lip 14 and the second outer lip 16 and the thick-wall base B between the first inner lip 13 and the first outer lip 15 being base points. Accordingly, since a large amount of axial flexure of the first inner lip 13 is provided, it can correspond to a possible axial displacement of the inner ring 1. This will be explained with reference to FIG. 3, a schematic view. That is, since the inner seal lip 12 is flexed at angles of θ1 and θ2 at the bases A and B, a large amount L of axial flexure of the first inner lip 13 is easily provided. In FIG. 3, the solid line indicates an original position of the inner peripheral seal lip 12, and the broken line indicates a flexure position.

Accordingly, a proper value of an interference of the first inner lip 13 corresponding to the face 7 of the peripheral shoulder portion 6 is easily maintained. The connecting portions 17 and 18 are formed in parallel and can correspond to the axial displacement of the inner ring 1 or the like in a further stable manner.

Further, when the inner peripheral surface of the first inner lip 13 is formed on a taper surface 23 opposite to the taper surface 9 of the peripheral shoulder portion 6 to form a labyrinth sealing portion between both the taper surfaces 9 and 23, the sealability is further improved.

Furthermore, when a member such as a slinger 20 pressed and secured to the shaft 22 provided in the inner ring 1 is arranged, a labyrinth sealing portion is formed between the member 20 and the outer lips 15, 16 to further improve the sealing effect.

If such labyrinth sealing is formed between the shoulder portion 6 and the inner lips 13, 14 of the inner peripheral seal lip 12, the sealing effect is further improved.

It is to be noted that the number of the inner lips 13, 14 and of the outer lips 15, 16 of the inner peripheral seal lip 12 need not be limited to two but a plurality of lips will be possible.

## Claims

1. Sealed rolling element bearing comprising:
an inner ring (1),
an outer ring (2),
rolling elements (3) between these rings
and a seal annulus (11) secured to the outer ring (2) and covering the gap between the rings,
the inner ring (1) having a shoulder (5) on which a peripheral shoulder portion (6) is provided which presents a ring-shaped face (7),
wherein along the radially inner peripheral portion (11 b) of the seal annulus (11) an inner peripheral seal lip (12) extends in a diametrical direction along the ring-shaped face (7) of the shoulder portion (6), and said peripheral seal lip (12) itself is provided with a plurality of seal lips: a first inner lip (13) protruding from a first base (B) at the radially extreme inner end of the inner peripheral seal lip (12) and extending in a direction to and placed in contact with the ring-shaped face (7), and a first outer lip (15) protruding from the base (B) at the radially inner end of the peripheral seal lip (12) in a direction opposite to the ring-shaped face (7), the peripheral seal lip (12) comprising a tapered, oblique connecting ring portion (17, 18) between the inner peripheral portion (11b) of the seal annulus (11) and the base (B) of the first inner and outer lips (13, 15),
**characterized in that** said peripheral seal lip (12) is provided with at least the following additional seal lips (14, 16) protruding from it from a respective additional base (A) in the inner peripheral seal lip (12), the additional base (A) being located between the first base (B) and the inner peripheral portion (11 b) of the seal annulus (11): at least one second inner lip (14) extending in the direction to the ring-shaped face (7) but coming in contact with the peripheral shoulder portion (6) not before the first inner lip (13) at the extreme end has been worn to a predetermined extent, and at least one second outer lip (16);
the connecting portions (17, 18) between the inner peripheral portion (11b) of the seal annulus (11) and the additional base (A), and between the additional base (A) and the first base (B) are each tapered so as to have a wider diameter in their regions closer to the ring-shaped face (7), and have each a minor wall-thickness with respect to the wall-thicknesses in the regions of the first and the additional bases (B, A) located between the inner and the outer lips (13,15; 14,16).

2. The bearing according to claim 1, wherein the connecting portions (17, 18) extend in parallel.

3. The bearing according to claim 1 or 2, wherein among the plurality of inner lips, an inner lip (14) other than the first mentioned inner lip (13) at the extreme end at the beginning forms a labyrinth sealing portion relative to the ring-shaped face (7) of said peripheral shoulder portion (6).

4. The bearing according to any of claims 1 to 3, wherein said plurality of outer lips (15, 16) together with a juxtaposed member (20) form a labyrinth sealing portion with respect to the bearing.

5. The bearing according to any of claims 1 to 4, **characterized in that** the peripheral shoulder portion (6) forms a radial seal groove in the inner ring (1), the first inner seal lip (13) penetrating into the seal groove, and the seal annulus (11) is provided at its inner peripheral portion (11b) with an axial lip (19) extending inwardly of the bearing to form a labyrinth sealing with the outer peripheral surface (1a) of the inner ring (1).

## Patentansprüche

1. Abgedichtetes Wälzlager, umfassend:
einen Innenring (1),
einen Außenring (2),
Wälzkörper (3) zwischen diesen Ringen
und einen Dichtungs-Ringkörper (11), der am Außenring (2) befestigt ist und den Spalt zwischen den Ringen überdeckt,
wobei der Innenring (1) eine Schulter (5) aufweist, an der ein Umfangsschulterteil (6) ausgebildet ist, der eine ringförmige Fläche (7) aufweist, und wobei entlang dem radial inneren Umfangsteil (11b) des Dichtungs-Ringkörpers (11) eine innere Umfangsdichtungslippe (12) in einer diametralen Richtung entlang der ringförmigen Fläche (7) des Schulterteils (6) absteht und selbst mit einer Mehrzahl von Dichtungslippen versehen ist: einer ersten Innenlippe (13), die von einer ersten Basis (B) am radial extremen inneren Ende der inneren Umfangsdichtungslippe (12) vorsteht und sich in einer Richtung zu der ringförmigen Fläche (7) erstreckt und in Kontakt mit dieser angeordnet ist, und einer ersten Außenlippe (15), die von der Basis (B) des radial inneren Endes der Umfangsdichtungslippe (12) in einer Richtung absteht, die der ringförmigen Fläche (7) entgegengesetzt ist, wobei die Umfangsdichtungslippe (12) einen konischen, schrägen Verbindungsringteil (17, 18) zwischen dem inneren Umfangsteil (11b) des Dichtungs-Ringkörpers (11) und der Basis (B) der ersten Innenlippe (13) und der ersten Außenlippe (15) umfaßt,
**dadurch gekennzeichnet, daß** die Umfangsdichtungslippe (12) mit wenigstens den folgenden zusätzlichen Dichtungslippen (14, 16) ausgestattet ist, die von ihr von einer jeweiligen zusätzlichen Basis (A) in der inneren Umfangsdichtungslippe (12) vorstehen, wobei die zusätzliche Basis (A) zwischen der ersten Basis (B) und dem inneren Umfangsteil (11b) des Dichtungs-Ringkörpers (11) angeordnet ist: wenigstens einer zweiten Innenlippe (14), die sich in der Richtung zur ringförmigen Fläche (7) erstreckt, jedoch mit dem Umfangsschulterteil (6) erst in Kontakt kommt, wenn die erste Innenlippe (13) am extremen Ende in vorgegebenem Maß abgenützt ist, und wenigstens eine zweite Außenlippe (16);
und daß die Verbindungsteile (17, 18) zwischen dem inneren Umfangsteil (11b) des Dichtungs-Ringkörpers (11) und der zusätzlichen Basis (A), und zwischen der zusätzlichen Basis (A) und der ersten Basis (B) jeweils konisch so ausgebildet sind, daß der Durchmesser in den Bereichen näher bei der ringförmigen Fläche (7) größer ist, und jeweils eine geringere Wandstärke im Vergleich zu den Wandstärken in den Bereichen der ersten und der zusätzlichen Basen (B, A), die zwischen den Innenlippen und den Außenlippen (13, 15; 14, 16) angeordnet sind, haben.

2. Lager nach Anspruch 1, bei dem die Verbindungsteile (17, 18) sich parallel erstrecken.

3. Lager nach Anspruch 1 oder 2, bei dem unter der Mehrzahl von Innenlippen eine Innenlippe (14), aber nicht die erstgenannte Innenlippe (13) am extremen Ende, zu Beginn ein Labyrinthdichtungsteil relativ zur ringförmigen Fläche (7) des Umfangsschulterteils (6) bildet.

4. Lager nach einem der Ansprüche 1 bis 3, bei dem die Mehrzahl der Außenlippen (15, 16) zusammen mit einem daneben gesetzten Bauteil (20) ein Labyrinthdichtungsteil mit Bezug zum Lager bilden.

5. Lager nach einem der Ansprüche 1 bis 4, **dadurch gekennzeichnet, daß** der Umfangsschulterteil (6) im Innenring (1) eine radiale Dichtungsnut bildet, in die die erste Innendichtungslippe (13) eingreift, und der Dichtungs-Ringkörper (11) an seinem Innenumfangsteil (11b) mit einer axialen Lippe (19) versehen ist, die sich zum Inneren des Lagers erstreckt, um eine Labyrinthdichtung mit der äußeren Umfangsfläche (1a) des Innenrings (1) zu bilden.

## Revendications

1. Palier à éléments de roulement étanches comprenant :
- une bague intérieure (1),
- une bague extérieure (2) ;
- des éléments de roulement (3) entre ces bagues, et
- un anneau d'étanchéité (11) fixé à la bague extérieure (2) et recouvrant l'intervalle entre les bagues,
- la bague intérieure (1) comportant un épaulement (5) sur lequel est prévue une partie d'épaulement périphérique (6) présentant une face en forme de bague (7),
- dans lequel, le long de la partie périphérique radialement intérieure (11b) de l'anneau d'étanchéité (11), une lèvre d'étanchéité périphérique intérieure (12) s'étend dans une direction diamétrale le long de la face en forme de bague (7) de la partie d'épaulement (6), et la lèvre d'étanchéité périphérique (12) elle-même est munie d'un certain nombre de lèvres d'étanchéité, à savoir : une première lèvre intérieure (13) faisant saillie sur une première base (B) à l'extrémité intérieure radialement extrême de la lèvre d'étanchéité périphérique intérieure (12), en s'étendant dans une direction dirigée vers la face en forme de bague (7), et en venant se placer en contact avec celle-ci, ainsi qu'une première lèvre extérieure (15) faisant saillie sur la base (B) à l'extrémité radialement intérieure de la lèvre d'étanchéité périphérique (12) dans une direction opposée à la face en forme de bague (7), la lèvre d'étanchéité périphérique (12) comprenant une partie d'anneau de liaison oblique conique (17, 18) entre la partie périphérique intérieure (11b) de l'anneau d'étanchéité (11), et la base (B) des premières lèvres intérieures et extérieures (13, 15),
**caractérisé en ce que**
la lèvre d'étanchéité périphérique (12) est munie d'au moins les lèvres d'étanchéité supplémentaires suivantes (14, 16) faisant saillie sur celle-ci par rapport à une base supplémentaire respective (A) dans la lèvre d'étanchéité périphérique intérieure (12), la base supplémentaire (A) étant placée entre la première base (B) et la partie périphérique intérieure (11b) de l'anneau d'étanchéité (11) : au moins une seconde lèvre intérieure (14) s'étendant dans la direction dirigée vers la face en forme de bague (7), mais ne venant pas en contact avec la partie d'épaulement périphérique (6) avant que la première lèvre intérieure (13) à l'extrémité finale, ait été usée jusqu'à un point prédéterminé, et
au moins une seconde lèvre extérieure (16) ;
les parties de liaison (17, 18) entre la partie périphérique intérieure (11b) de l'anneau d'étanchéité (11) et la base supplémentaire (A), ainsi qu'entre la base supplémentaire (A) et la première base (B) sont chacune conique de manière à présenter un diamètre plus large dans leurs zones les plus proches de la face en forme de bague (7), et présentent chacune une épaisseur de paroi moins par rapport aux épaisseurs de paroi dans les zones de la première base (B) et de la base supplémentaire (A) situées entre les lèvres intérieures et extérieures (13, 15 ; 14, 16).

2. Palier selon la revendication 1,
dans lequel
les parties de liaison (17, 18) s'étendent en parallèle.

3. Palier selon la revendication 1 ou 2,
dans lequel
parmi la pluralité de lèvres intérieures, une lèvre intérieure (14) autre que la première lèvre intérieure (13) indiquée à l'extrémité finale, forme au début une partie d'étanchéité en labyrinthe par rapport à la face en forme de bague (7) de la partie d'épaulement périphérique (6).

4. Palier selon l'une quelconque des revendications 1 à 3,
dans lequel
la pluralité de lèvres extérieures (15, 16) forme, en association avec un élément juxtaposé (20), une partie d'étanchéité en labyrinthe par rapport au palier.

5. Palier selon l'une quelconque des revendications 1 à 4,
**caractérisé en ce que**
la partie d'épaulement périphérique (6) forme une rainure d'étanchéité radiale dans la bague intérieure (1), la première lèvre d'étanchéité intérieure (13) pénétrant dans cette rainure d'étanchéité, tandis que l'anneau d'étanchéité (11) est muni, dans sa partie périphérique intérieure (11b), d'une lèvre axiale (19) s'étendant vers l'intérieur du palier pour former un joint d'étanchéité en labyrinthe avec la surface périphérique extérieure (la) de la bague intérieure (1).
